Europäisches Patentamt

European Patent Office

Office européen des brevets

(11) Veröffentlichungsnummer: **0 421 191 A1**

# EUROPÄISCHE PATENTANMELDUNG

(21) Anmeldenummer: 90118028.1

(51) Int. Cl.⁵: **B64F 1/315**

(22) Anmeldetag: 19.09.90

(30) Priorität: 03.10.89 DE 8911780 U

(43) Veröffentlichungstag der Anmeldung:
10.04.91 Patentblatt 91/15

(84) Benannte Vertragsstaaten:
AT CH DE FR GB IT LI NL

(71) Anmelder: FFG FAHRZEUGWERKSTÄTTEN
FALKENRIED GMBH
Falkenried 7-19
W-2000 Hamburg 20(DE)

(72) Erfinder: Feutlinske, Hilmar, Ing. (grad)
Wentzelstrasse 20a
W-2000 Hamburg 60(DE)
Erfinder: Materne, Wolfgang, Dipl.-Ing.
Volksdorfer Weg 25
W-2075 Ammersbek(DE)

(74) Vertreter: Glawe, Delfs, Moll & Partner
Patentanwälte
Postfach 26 01 62 Liebherrstrasse 20
W-8000 München 26(DE)

(54) **Treppenfahrzeug.**

(57) Bei dem Treppenfahrzeug, insbesondere einer fahrbaren Flugfeldtreppe, sind Teile (7) der üblicherweise vollständig geschlossenen Seitenflächen zumindest zeitweise, d.h. beim Rangieren, winddurchlässig. Sie sind zu diesem Zweck mit Öffnungen versehen oder können geöffnet und geschlossen werden.

Fig. 1

## TREPPENFAHRZEUG

Die Erfindung betrifft ein Treppenfahrzeug, insbesondere fahrbare Flugfeldtreppe, mit einem ein geschlossenes Treppengehäuse umfassenden Treppenteil.

Flugfeldtreppen, über die die Fluggäste vom Flugfeld her die Einstiegöffnungen des Flugzeugs erreichen, müssen für moderne Großraumflugzeuge beträchtliche Höhe haben. Nur bei geringer Höhe hat man bislang geschlossene Treppengehäuse zum Schutz der Fluggäste angewendet, weil bei großer Höhe ihr beträchtlicher Seitenwindwiderstand die Standsicherheit gefährdet. Dabei ist die Standsicherheit bei fertig aufgestellter Treppe ein zu lösendes Problem, da in diesem Fall die Standsicherheit des Fahrzeugs durch ausfahrbare Stützen gewährleistet ist. Die Probleme der Seitenwindempfindlichkeit treten eher beim Verfahren des Treppenfahrzeuges sowie beim Rangieren an die Einstiegöffnung auf, da dann das Fahrzeug nicht durch die ausfahrbaren Stützen gesichert ist.

Die Aufgabe der Erfindung besteht in der Schaffung eines Treppenfahrzeugs der eingangs ganannten Art, das zumindest beim Rangieren eine gegenüber bekannten Konstruktionen geringere Seitenwindempfindlicheit hat.

Der allgemeine Lösungsgedanke besteht darin, daß zumindest Teile der üblicherweise vollständig geschlossenen Seitenflächen zumindest zeitweise, d.h. beim Rangieren, winddurchlässig gemacht werden. Dabei ist allerdings der Fall nicht ausgeschlossen, daß diese Seitenflächen dauernd winddurchlässig sind, wobei dann allerdings besondere Maßnahmen getroffen werden, damit Regen oder Schnee nicht in das Innere des Treppengehäuses dringen kann.

Eine Ausführungsform zeichnet sich dadurch aus, daß zumindest Teile, in erster Linie die oberen Teile der Seitenflächen aus Lamellen aufgebaut sind, deren parallele Elemente im wesentlichen horizontal angeordnet sind.

Eine andere Ausführungsform zeichnet sich dadurch aus, daß die Seitenwände Lamellen mit um parallele Achsen verschwenkbaren Lamellenelementen aufweisen. Die Achsen können dabei horizontal, vertikal oder z.B. schräg, d.h. in Anstiegsrichtung der Treppe angeordnet werden. Während des Rangierens werden die Lamellen geöffnet, so daß der Wind hindurchtreten kann und die Seitenwindempfindlichkeit herabgesetzt ist. Nach fertigem Aufstellen und Herausfahren der ausfahrbaren Stützen werden dann die Lamellen geschlossen, da die dann entstehende höhere Seitenwindempfindlichkeit durch die Stützen kompensiert wird und so der gewünschte geschlossene Treppenraum für die Passagiere geschaffen wird.

Gemäß einer weiteren Ausführungsform der Erfindung weisen die Seitenflächen plattenförmige Wandelemente auf, die am Dach des Treppengehäuses mit einer Schwenkverbindung befestigt sind.

Bei einer anderen erfindungsgemäßen Ausführungsform sind die Platten mit Schwenkverbindungen an starren Wandteilen befestigt, die sich vom Boden nach oben erstrecken.

Bei diesen Ausführungsformen können die schwenkbaren Seitenwandteile zum Rangieren entweder innen unter das Dach oder innen oder außen gegen die feststehenden Wandteile geschwenkt werden, so daß hier der Winddurchtritt ermöglicht wird.

Bei einer weiteren vorteilhaften Ausführungsform sind die plattenförmigen Wandelemente in Gleitführungen in oder an starren Seitenwandelementen gelagert, die mit dem Boden verbunden sind.

Bei einer weiteren Ausführungsform sind Seitenwandelemente flexible Materialbahnen, die an einer drehbaren Auswickelrolle befestigt sind.

Bei einer weiteren bevorzugten Ausführungsform sind Seitenwandelemente als Jalousien mit parallelen, schwenkbar miteinander verbundenen Stäben ausgebildet, die in Gleitführungen für eine Bewegung senkrecht zur Längserstreckung der Stäbe angeordnet sind.

Bei einer noch weiteren Ausführungsform bildet der Dachteil mit Seitenwänden ein im Querschnitt U-förmiges Element, das in Führungen für eine Bewegung nach oben und unten gelagert ist.

Vorteilhafte Ausführungsformen werden im folgenden unter Bezugnahme auf die beigefügten Zeichnungen beschrieben. Es zeigen:

Fig. 1 den prinzipiellen Aufbau des Treppenfahrzeugs;

Fig. 2 in einem Schnitt entlang der Linie A-A eine erste Ausführungsform der Erfindung;

Fig. 3 in einem Schnitt entlang der Linie A-A eine zweite Ausführungsform der Erfindung;

Fig. 4 in einem Schnitt entlang der Linie A-A eine dritte Ausführungsform der Erfindung;

Fig. 5 in einem Schnitt entlang der Linie A-A eine vierte Ausführungsform der Erfindung;

Fig. 6 in einem Schnitt entlang der Linie A-A eine fünfte Ausführungsform der Erfindung; und

Fig. 7 in einem Schnitt entlang der Linie A-A eine sechste Ausführungsform der Erfindung.

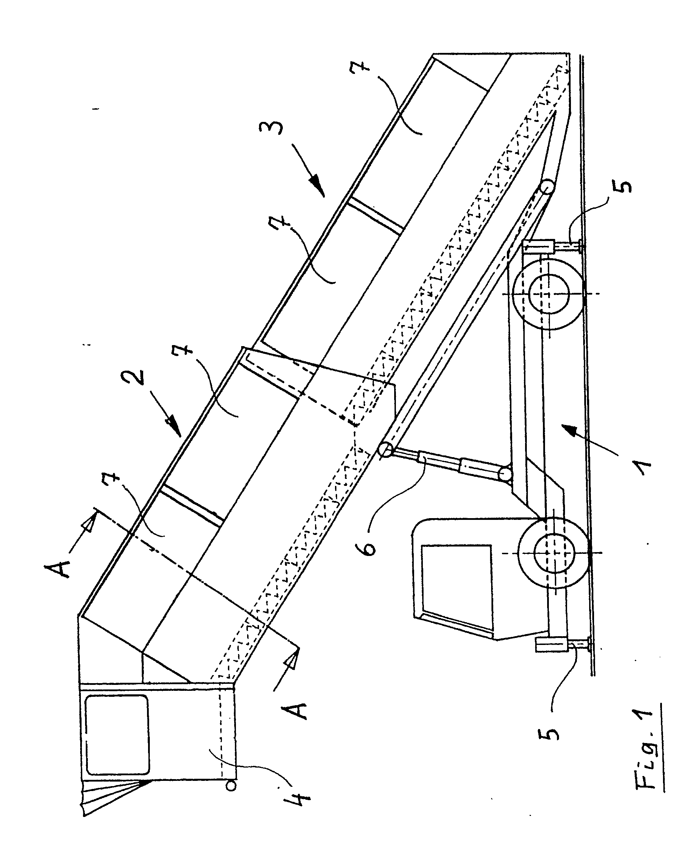

Das in Fig. 1 gezeigte Treppenfahrzeug 1 trägt zwei teleskopartig ineinanderschiebbare Treppenteile 2 und 3. Am oberen Ende des oberen Treppenabschnitts 2 befindet sich die Übergangsplattform 4, mit der die Einstiegsöffnung eines Flugzeugs erreicht werden kann. Wenn die Einstiegsöffnung von der Übergangsplattform 4 erreicht ist,
werden die absenkbaren Stützen 5 ausgefahren, so
daß die Standsicherheit des Fahrzeugs 1 auch bei
Seitenwind gewährleistet ist. Zum Verfahren des
Fahrzeugs 1 werden die Treppenteile 2 und 3
teleskopartig ineinandergeschoben, und die aus
den Teilen 2, 3 bestehende Treppe wird mit Hilfe
der hydraulischen Kolben-Zylindereinheit 6 abgesenkt.

Eine besonders große Windempfindlichkeit besteht, wenn die Treppenteile 2 und 3 in die in Fig.
1 gezeigte Stellung ausgefahren sind, die Stützen 5
aber noch nicht ausgefahren sind, da noch rangiert
werden muß. Zumindest in diesem Zustand ist nun
erfindungsgemäß vorgesehen, daß Wandfelder 7 in
den Treppenteilen 2 und 3 winddurchlässig sind.

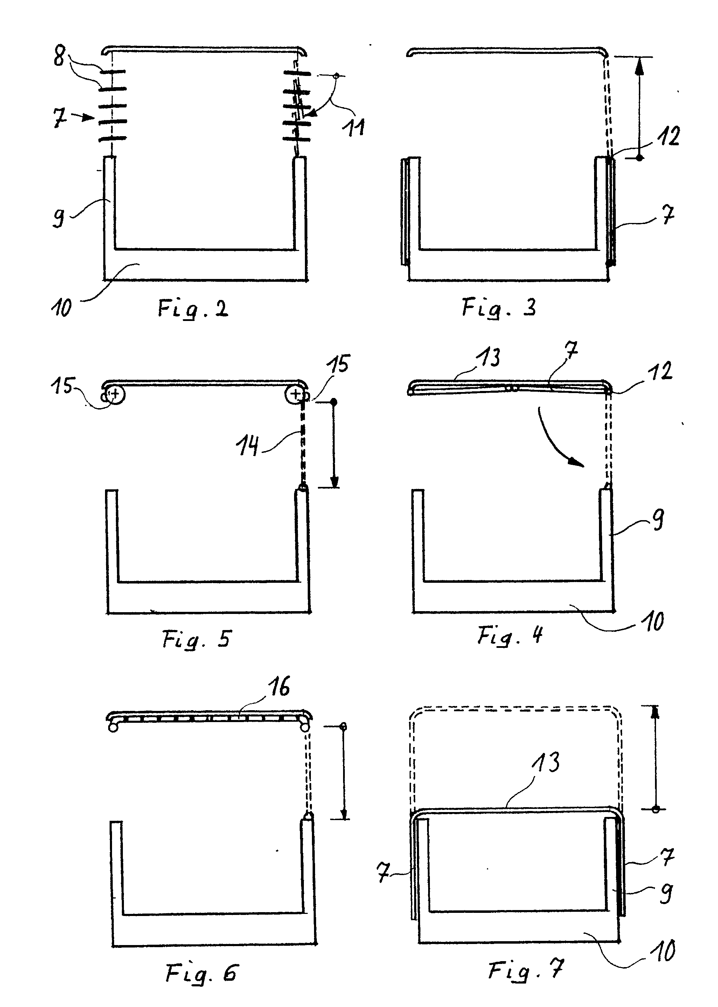

Bei der Ausführungsform der Fig. 2 weisen die
Seitenwandfelder 7 parallele Lamellen 8 auf, die
oberhalb von starren Wandteilen 9 angeordnet
sind, die mit dem Boden 10 verbunden sind. Bei
der gezeigten Ausführungsform haben die Lamellen 8 eine Längserstreckung, die im wesentlichen
der Längserstreckung der Treppenteile 2 und 3
entspricht. Die Lamellenteile 8 können dann um
entsprechende parallele Achsen verschwenkt werden, wie dies rechts in Fig. 2 mit dem Pfeil 11
angedeutet ist. Während des Rangierens befinden
sich die Lamellen 8 in der offenen Stellung, in der
Einstiegs- oder Ausstiegsphase für die Passagiere
in der geschlossenen Stellung. Die Lamellen könnten auch um waagerechte, horizontale oder aber
um Achsen verschwenkt werden, die senkrecht zur
Längserstreckung der Treppenabschnitte 2 und 3
stehen. Sind die Lamellen im wesentlichen horizontal angeordnet, so können sie bei ausreichender
Quererstreckung auch starr so angeordnet werden,
wie dies in Fig. 2 links gezeigt ist. In diesem Fall
wird der Durchtritt von Wind möglich; Regen oder
Schnee können aber nicht in das Innere des Treppengehäuses eintreten.

Bei der Ausführungsform der Fig. 3 sind die
Wandfelder 7 plattenförmige Elemente, die um
Achsen 12 in die geschlossene Stellung geschwenkt werden können.

Bei der Ausführungsform der Fig. 4 sind die
Platten ebenfalls um Achsen 12 schwenkbar, die
allerdings am Dach 13 angeordnet sind, so daß die
Wandteile 7 nach innen geschwenkt werden können. Man könnte auch vorsehen, daß die starren
plattenförmigen Wandteile 7 an den starren Wandabschnitten 9 gleitend befestigt sind, indem sie
außen an den Wandteilen 9 nach unten verschoben
werden können oder in entsprechende Ausnehmungen der Wandteile 9 versenkt werden können.

Bei der Ausführungsform der Fig. 5 sind die
Wandteile 7 flexible Bahnen 14, die auf Aufwickelrollen 15 aufgerollt werden können. In Fig. 5 ist links die geöffnete, rechts die geschlossene Stellung gezeigt.

Bei der Ausführungsform der Fig. 6 sind die
Wandteile 7 als Jalousien 16 ausgebildet, die unter
das Dach geschoben werden können.

Bei der Ausführungsform der Fig. 7 sind Dach
13 und Wandteile 7 starr miteinander zu einem
Gebilde mit U-förmigem Querschnitt verbunden,
das insgesamt auf den Unterteil, d.h. die Seitenwände 9 und den Boden 10 abgesenkt werden
kann, wodurch sich der dem Wind ausgesetzte
Querschnitt verringert.

**Ansprüche**

1. Treppenfahrzeug, insbesondere Flugfeldtreppe,
mit einem ein geschlossenes Treppengehäuse umfassenden Treppenteil, dadurch gekennzeichnet,
daß zumindest Teile (7) der Seitenflächen mit Öffnungen versehen sind und/oder geöffnet und geschlossen werden können.
2. Treppenfahrzeug nach Anspruch 1, dadurch gekennzeichnet, daß zumindest Teile (7) der Seitenflächen starr angeordnete parallele Lamellen (8)
aufweisen, die sich im wesentlichen in Horizontalrichtung sowohl in Längsrichtung als auch Querrichtung erstrecken.
3. Treppenfahrzeug nach Anspruch 1, dadurch gekennzeichnet, daß zumindest Teile der Seitenflächen bewegliche Lamellen aufweisen.
4. Treppenfahrzeug nach Anspruch 1, dadurch gekennzeichnet, daß zumindest Teile der Seitenflächen am Dach (13) schwenkbar befestigte Platten
(7) aufweisen.
5. Treppenfahrzeug nach Anspruch 1, dadurch gekennzeichnet, daß zumindest Teile der Seitenflächen an der Seitenwand (9) schwenkbar befestigte
Platten (7) aufweisen.
6. Treppenfahrzeug nach Anspruch 1, dadurch gekennzeichnet, daß zumindest Teile der Seitenflächen an starren Wandteilen (9) verschiebbar befestigte Platten (7) aufweisen.
7. Treppenfahrzeug nach Anspruch 1, dadurch gekennzeichnet, daß zumindest Teile der Seitenflächen Folien oder Planen (14) mit Aufwickelrollen
(15) aufweisen.
8. Treppenfahrzeug nach Anspruch 1, dadurch gekennzeichnet, daß zumindest Teile der Seitenflächen Jalousien (16) aufweisen.
9. Treppenfahrzeug nach Anspruch 1, dadurch gekennzeichnet, daß das aus Dach (13) und Seitenwandteilen (7) bestehende Oberteil von Treppenteilen (2, 3) mit Führungen zur Absenkung desselben
auf den Bodenteil (9, 10) versehen ist.

Fig. 1

EP 0 421 191 A1

Fig. 2

Fig. 3

Fig. 5

Fig. 4

Fig. 6

Fig. 7

Europäisches
Patentamt

**EUROPÄISCHER RECHERCHENBERICHT**

Nummer der Anmeldung

**EP 90 11 8028**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 256 976 (GEBRUDER FRECH AG) <br> * Zusammenfassung * <br> – – – | 1 | B 64 F 1/315 |
| A | DE-U-8 517 846 (FRANKE-HÜNERT GmbH) <br> * Seite 7, Zeilen 20-24 * <br> – – – | 1 | |
| A | DE-U-8 909 614 (FFG FAHRZEUGWERKSTATTEN FAL-KENRIED GmbH) <br> * Seite 2, Zeilen 13-18 * <br> – – – – – | 1 | |
| | | | **RECHERCHIERTE SACHGEBIETE (Int. Cl.5)** <br><br> B 64 F |

Der vorliegende Recherchenbericht wurde für alle Patentansprüche erstellt

| Recherchenort | Abschlußdatum der Recherche | Prüfer |
|---|---|---|
| Den Haag | 07 Januar 91 | HAUGLUSTAINE H.P.M. |